(19) **Europäisches Patentamt**

**European Patent Office**

**Office européen des brevets**

(11) **EP 0 924 271 B1**

(12) **EUROPÄISCHE PATENTSCHRIFT**

(45) Veröffentlichungstag und Bekanntmachung des Hinweises auf die Patenterteilung:
**03.03.2004 Patentblatt 2004/10**

(51) Int Cl.⁷: **C09D 7/12**, C09D 11/02
// C09C1/56

(21) Anmeldenummer: **98123204.4**

(22) Anmeldetag: **05.12.1998**

(54) **Modifizierte Russe enthaltende Lacke und Druckfarben**

Lacquers and printing inks containing modified carbon blacks

Peintures et encres d'imprimerie contenant des noirs de carbone modifiés

(84) Benannte Vertragsstaaten:
**DE ES FR GB IT NL PT**

(30) Priorität: **18.12.1997 DE 19756465**

(43) Veröffentlichungstag der Anmeldung:
**23.06.1999 Patentblatt 1999/25**

(73) Patentinhaber: **Degussa AG**
**40474 Düsseldorf (DE)**

(72) Erfinder:
• **Otto, Karin Dr.**
**53121 Bonn (DE)**

• **Stroh, Peter**
**63674 Altenstadt (DE)**

(56) Entgegenhaltungen:
**WO-A-97/47698** **US-A- 5 749 950**

• **PATENT ABSTRACTS OF JAPAN vol. 012, no. 297 (C-519), 12. August 1988 & JP 63 063755 A (DAINICHI COLOR & CHEM MFG CO LTD;OTHERS: 01), 22. März 1988**

# EP 0 924 271 B1

**Beschreibung**

Die Erfindung betrifft Lacke und Druckfarben, welche als Pigment Ruß enthalten.

In Lacken und Druckfarben wird als Schwarzpigment wegen seiner hervorragenden Eigenschaften überwiegend Ruß eingesetzt. Neben reinen schwarzen Farben kommt Ruß auch zur Abtönung mit anderen Pigmenten zum Einsatz, insbesondere zur Herstellung von Grautönen durch Abmischungen von Ruß mit Weißpigmenten wie Titandioxid und anderen Weißpigmenten.

Pigmentruße stehen in großer Auswahl mit unterschiedlichen Eigenschaften zur Verfügung. Zur Herstellung von Pigmentruß werden verschiedene Verfahren eingesetzt. Am häufigsten ist die Herstellung durch oxidative Pyrolyse von kohlenstoffhaltigen Rußrohstoffen. Hierbei werden die Rußrohstoffe bei hohen Temperaturen in Anwesenheit von Sauerstoff unvollständig verbrannt. Zu dieser Klasse von Ruß-Herstellverfahren gehören zum Beispiel das Furnaceruß-Verfahren, das Gasruß-Verfahren und das Flammruß-Verfahren. Als kohlenstoffhaltige Rußrohstoffe werden überwiegend mehrkernige aromatische Rußöle eingesetzt. Der Produktstrom der oxidativen Pyrolyse besteht aus einem Wasserstoff und Kohlenmonoxid enthaltenden Abgas und darin suspendiertem feinteiligen Ruß, der in einer Filteranlage vom Abgas abgetrennt wird.

Zu den Herstellverfahren durch oxidative Pyrolyse gehören das Furnaceruß-Verfahren, das Flammruß-Verfahren und das Gasruß-Verfahren. Beim Furnaceruß-Verfahren erfolgt die unvollständige Verbrennung in einem mit hochfeuerfestem Material ausgekleideten Reaktor. Hierzu wird in einer Vorbrennkammer durch Verbrennen eines Brennstoff/Luft-Gemisches eine Flamme erzeugt, in die der Rußrohstoff eingesprüht oder eingespritzt wird. Der sich bildende Ruß wird durch Einsprühen von Wasser in den Reaktor abgeschreckt und vom Gasstrom abgetrennt. Das Furnaceruß-Verfahren erlaubt die Herstellung von Rußen mit einer sehr großen Bandbreite der rußtechnischen Eigenschaften.

Flammruß- und Gasruß-Verfahren stellen wichtige Alternativen zum Furnaceruß-Verfahren dar. Sie liefern Ruße, deren Eigenschaften sich zum Teil mit den durch das Furnaceruß-Verfahren zugänglichen rußtechnischen Eigenschaften überlappen, jedoch auch die Herstellung von Rußen ermöglichen, die durch das Furnaceruß-Verfahren nicht herstellbar sind.

Die Flammruß-Apparatur besteht aus einer gußeisernen Schale, die den flüssigen oder gegebenenfalls geschmolzenen Rohstoff aufnimmt, und einer feuerfest ausgemauerten Abzugshaube. Der Luftspalt zwischen Schale und Abzugshaube sowie der Unterdruck im System dienen zum Regulieren der Luftzufuhr und damit zur Beeinflussung der Rußeigenschaften. Infolge der Hitzestrahlung der Abzugshaube verdampft der Rohstoff und wird teilweise verbrannt, hauptsächlich jedoch in Ruß überführt. Zur Abtrennung des Rußes werden die rußhaltigen Prozeßgase nach dem Abkühlen in ein Filter geleitet.

Beim Gasruß-Verfahren wird der Rußrohstoff zunächst in einen wasserstoffhaltigen Trägergasstrom hinein verdampft und dann in einer Vielzahl von kleinen Flämmchen unterhalb einer gekühlten Walze verbrannt. Ein Teil des entstehenden Rußes scheidet sich auf der Walze ab, ein anderer wird mit den Prozeßgasen ausgetragen und in einem Filter abgeschieden.

Die für die Beurteilung von Pigmentrußen wichtigen Eigenschaften sind die Farbtiefe $M_Y$ (nach DIN 55979), die Farbstärke (nach DIN EN ISO 787/16 und DIN EN ISO 787/24), der Ölbedarf (nach DIN EN ISO 787/5), die flüchtigen Bestandteile (nach DIN 53552), die Struktur, gemessen als DBP-Adsorption (nach DIN 53601, ISO 4656 oder ASTM D2414), die mittlere Primärteilchengröße (durch Auswertung von elektronenmikroskopischen Aufnahmen) und der pH-Wert (nach DIN EN ISO 787/9 oder ASTM D1512).

Tabelle 1 zeigt die durch die erwähnten Herstellverfahren zugänglichen Eigenschaftsbereiche von Pigmentrußen.

Tabelle 1:

| Eigenschaft | | Furnaceruß | Gasruß | Flammruß |
|---|---|---|---|---|
| Farbtiefe $M_Y$ | | 210-270 | 230-300 | 200-220 |
| Farbstärke IRB3 = 100 | [%] | 60-130 | 90-130 | 25-35 |
| Ölbedarf | [g/100g] | 200-500 | 220-1100 | 250-400 |
| flüchtige Bestand. | [Gew.-%] | 0,5-6,0 | 4-24 | 1-2,5 |
| DBP-Adsorption | [ml/100g] | 40-200 | | 100-120 |
| Teilchengröße | [nm] | 10-80 | 10-30 | 110-120 |
| Größenverteilung | | | eng | breit |
| pH-Wert | | 6-10 | 4-6 | 6-9 |

Die wichtigsten Eigenschaften für die Auswahl der Pigmentruße sind ihre Farbtiefe und Struktur. Die Farbtiefe hängt direkt von der Teilchengröße ab. Je kleiner die Teilchen, desto farbtiefer ist der Pigmentruß. Die Teilchengröße beeinflußt darüber hinaus andere Eigenschaften wie Ölabsorption und Viskosität des fertigen Lackes oder der Druckfarbe. Die Struktur des Rußes beeinflußt ebenfalls die Viskosität des fertigen Produktes und ist für die Herstellung und Verarbeitung der Lacke und Druckfarben wichtig. Hohe Struktur bedingt hohe Viskosität bei gleicher Pigmentfüllung und umgekehrt.

Wichtige anwendungstechnische Eigenschaften eines Lackes oder einer Druckfarbe sind die Stabilität der Rußdispersion im Bindemittelsystem (Lagerstabilität), das Ausschwimmverhalten bei Pigmentmischungen und das rheologische Verhalten des Lackes oder der Druckfarbe (Viskosität und Thixotropie).

Die Stabilität der Rußdispersion in einem Bindemittel kann beispielsweise durch Zusatz von hochdisperser Kieselsäure verbessert werden. Durch Zugabe der Kieselsäure kann sich jedoch die Viskosität des Produktes in unerwünschter Weise erhöhen. Die erhöhte Viskosität kann durch vermehrte Zugabe von Lösungsmitteln rückgängig gemacht werden.

Lacke können ein sogenanntes Ausschwimmverhalten zeigen, wenn sie eine Pigmentmischung enthalten. Unter dem Ausschwimmverhalten versteht man die Beobachtung, daß zum Beispiel bei Graulacken sich die Weißpigmente und der Ruß beim Trocknungsvorgang des Lackes voneinander trennen und eine Farbverschiebung bewirken. Dieses Verhalten ist leicht durch den sogenannten "Rub-Out-Test" zu überprüfen. Hierbei wird der Lack auf eine Prüffläche aufgebracht. Nach einer kurzen Antrocknung wird eine Hälfte der Prüffläche zum Beispiel mit dem Finger ausgerieben. War eine Trennung der beiden Pigmente durch Ausschwimmen eingetreten, so wird diese Trennung durch die mechanische Beanspruchung beim Ausreiben wieder rückgängig gemacht, und man erkennt einen deutlichen Farbunterschied der beiden Prüfhälften. Diese Eigenschaft kann in der praktischen Anwendung des Lackes zu unterschiedlichen Farbtönen führen und sollte daher so klein wie möglich gehalten werden.

In den Pigmentanreibungen werden hohe Rußkonzentrationen angestrebt. Dies führt zu ökonomischen Vorteilen durch höhere Durchsätze sowie zu ökologischen Vorteilen durch den verringerte Lösungsmittelbedarf und die Möglichkeit der Herstellung von lösemittelarmen "High Solid"-Lacken.

Aus WO 97 47698 sind Tinten oder Beschichtungen bekannt, die Siliziumhaltige Ruße mit einem Siliziumgehalt von 0,1 bis 25 Gew.-% Silizium enthalten.

Aufgabe der vorliegenden Erfindung ist die Angabe von Lacken und Druckfarben, die bezüglich ihrer Lagerstabilität, ihres Ausschwimmverhaltens und ihres Lösungsmittelbedarfs gegenüber konventionellen Lackformulierungen verbessert sind. Unter dem Begriff Lacke und Druckfarben werden im Rahmen der Erfindung auch Tinten für Tintenstrahldrucker und Toner verstanden.

Diese Aufgabe wird gelöst durch einen Lack, welcher ein Lack-Bindemittelsystem und Ruß als Pigment enthält. Der Lack ist dadurch gekennzeichnet, daß der Ruß 0,1 bis 30 Gew.-% Silizium, berechnet als Siliziumdioxid, bezogen auf sein Gesamtgewicht, und 0,01 bis 2 Gew.-% Stickstoff enthält, wobei der Ruß hergestellt wird durch Zusetzen von stickstoffhaltigen Siliziumverbindungen in den Rußrohstoff.

Silizium enthaltende Ruße sind zum Beispiel aus der WO 96/37547 bekannt. Sie werden in dieser Schrift für die Verwendung in Gummimischungen beschrieben. Siliziumhaltige Ruße können zum Beispiel dadurch hergestellt werden, daß dem Rußrohstoff siliziumhaltige Verbindungen zugesetzt werden. Alternativ besteht die Möglichkeit, die siliziumhaltigen Verbindungen kurz vor oder direkt in der Rußbildungszone dem Eduktstrom des jeweiligen Rußprozesses zuzuführen.

Geeignete siliziumhaltige Verbindungen sind siliziumorganische Verbindungen wie Organosilane, Organochlorsilane, Siloxane und Silazane. Insbesondere sind Siliziumtetrachlorid, Siloxane und Silazane geeignet. Bevorzugt werden Kieselsäuremethyl- oder ethylester, Siloxane und Silazane für die Herstellung der siliziumhaltigen Ruße verwendet. Diese Stoffe werden bevorzugt dem Rußrohstoff selber beigemischt.

Bei Verwendung stickstoffhaltiger Siliziumverbindungen, wie zum Beispiel der Silazane, finden sich im Ruß neben den oxidisch gebundenen Siliziumatomen auch chemisch gebundene Stickstoffatome, zum Beispiel in Form aminofunktioneller Gruppen, wieder. Solche Ruße können je nach Stickstoffgehalt der Ausgangsverbindungen und ihrer Konzentration im Rußrohstoff 0,01 bis 2 Gew.-% Stickstoff zusätzlich zum Silizium enthalten.

Ein weiterer Gegenstand der Erfindung ist eine Druckfarbe enthaltend ein Bindemittelsystem und Ruß als Pigment, welches dadurch gekennzeichnet ist, daß der Ruß 0,1 bis 30 Gew.-% Silizium, berechnet als Siliziumdioxid und bezogen auf sein Gesamtgewicht, und 0,01 bis 2 Gew.-% Stickstoff enthält, wobei der Ruß hergestellt wird durch Zusetzen von stickstoffhaltigen Siliziumverbindungen in den Rußrohstoff.

Die Druckfarbe kann als zusätzliches Pigment Titandioxid oder ein Buntpigment oder Pigment mischungen enthalten.

Die Druckfarbe kann zusätzlich wenigstens ein plättchenförmiges Pigment enthalten. Das plättchenförmige Pigment kann ein Perlglanzpigment, Aluminiumflakes oder eine Mischung davon sein.

Überraschenderweise zeigen die siliziumhaltigen Ruße in Lackbindemittelsystemen und in Vehikeln für Druckfarben sehr positive Eigenschaften. So erhöht sich zum Beispiel die Dispersionsstabilität des Lackes, ohne daß dadurch die Viskosität des Lackes wesentlich verschlechtert wird. Dies ist unerwartet, da das übliche Verfahren der Erhöhung der Lagerstabilität durch Zugabe von hochdisperser Kieselsäure, das heißt durch separate Zugabe einer Siliziumverbindung zum Lackbindemittelsystem, stets auch eine Verdickung des Lackes zur Folge hatte. Die Verwendung von siliziumhaltigen Rußen verbessert dagegen die Lagerstabilität ohne daß sich dadurch die Viskosität in gleicher Weise erhöht wie bei der Verbesserung der Lagerstabilität von siliziumfreien Rußen durch Zugabe von hochdisperser Kieselsäure.

Die Viskosität des Lackes oder der Druckfarbe ist üblicherweise besonders ausgeprägt bei Verwendung hochstrukturierter Ruße mit DBP-Adsorptionswerten von über 100 ml/100 g. Durch Verwendung von siliziumhaltigen Rußen kann die Viskosität deutlich vermindert werden. Das ermöglicht es bei organischen Lackbindemitteln, eine gewünschte Viskosität des Lackes mit geringeren Mengen an Lösungsmitteln einzustellen.

Bei der Anfertigung von Graulacken mit Weißpigmenten wie zum Beispiel Titandioxid und/oder Zinkoxid unter Verwendung der siliziumhaltigen Ruße zeigt sich als weitere positive Eigenschaft dieser Ruße ein deutlich verringertes Ausschwimmverhalten des Lackes. Neben der Kombination mit Weißpigmenten können die vorteilhaften Eigenschaften der siliziumhaltigen Ruße auch in Kombination mit Buntpigmenten wie zum Beispiel Cadmium-, Kobalt- und Eisenverbindungen mit unterschiedlichem chemischen Aufbau genutzt werden.

Das Lackbindemittelsystem kann ein lösemittelhaltiges oder wasserhaltiges Bindemittelsystem sein.

Besonders vorteilhaft lassen sich die siliziumhaltigen Ruße auch in Kombination mit plättchenförmigen Pigmenten wie zum Beispiel Perlglanzpigmenten und Aluminiumflakes einsetzen. Ihre volle Wirkung können diese Pigmente nur dann entfalten, wenn sie die Möglichkeit haben, sich in der Lackschicht parallel auszurichten. Hierfür sind Lacke mit geringer Viskosität und geringer Thixotropie wünschenswert. Die Verminderung der Viskosität eines Lackes durch siliziumhaltige Ruße erleichtert somit die Ausrichtung der plättchenförmigen Pigmente und führt zum Beispiel zu einem besseren Perlglanzeffekt.

Die folgenden Beispiele sollen die Erfindung näher erläutern. Die Bestimmung der lacktechnischen Eigenschaften erfolgte nach folgenden Methoden und Normen:

| | |
|---|---|
| Schwarzzahl My, (Farbtiefe) | DIN 55 979 |
| Density (optische Dichte) | nach Schriftenreihe Pigmente Nr. 24 der Degussa AG; Seite 13 |
| Haze/Glanz | Messung mit dem Haze/Gloss-Meter der Firma Byk nach DIN 67530 |
| Viskosität | Messung mit einem Rotationsviskosimeter nach ISO 3219/DIN 53019 |
| Thixotropieindex | nach Schriftenreihe Pigmente Nr. 54 der Degussa AG; Seite 3 |
| Ausschwimmverhalten | DIN 55 945 |

Die Schwarzzahl $M_Y$ (Farbtiefe) wird gewöhnlich zur Charakterisierung von tiefschwarzen Lacken und Druckfarben verwendet. Graulacke werden dagegen mit Hilfe der optischen Dichte D beurteilt, die gemäß der Schriftenreihe Pigmente Nr. 24 der Degussa AG, Seite 13, gegeben ist durch

$$D = 2\text{-}\log(R),$$

wobei die Reflektion R in Prozent angegeben wird. Ein idealer Weißlack mit 100% Reflektion hat demnach eine optische Dichte D=0.

Der Thixotropieindex ist in der Schriftenreihe Pigmente Nr. 54 der Degussa AG, Seite 3, erläutert. Er errechnet sich aus dem Verhältnis der Viskositäten des Lackes bei niedrigem ($\eta_1$) und hohem ($\eta_2$) Schergefälle SG:

$$\text{Thixotropie-Index} = \eta_1/\eta_2$$

### Beispiel 1: (nicht erfindungsgemäß)

Es wurden vier verschiedene Ruße nach dem Furnaceruß-Verfahren hergestellt. Dem Rußrohstoff wurden unterschiedliche Mengen an Silikonöl (Polydimethylsiloxan, CAS-Nr. 63148-62-9) zugesetzt. Die rußtechnischen Eigenschaften dieser Ruße sind in Tabelle 2 wiedergegeben.

Tabelle 2:

| rußtechnische Eigenschaften Si-dotierter Ruße | | | | | |
|---|---|---|---|---|---|
| Eigenschaften | | Ruß1 | Ruß2 | Ruß3 | Ruß4 |
| Asche | [Gew.-%] | 0,1 | 12,1 | 14,2 | 15,7 |
| CTAB | [m$^2$/g] | 120 | 115 | 117 | 121 |
| Jodadsorption | [mg/g] | 142 | 99 | 110 | 116 |
| BET-Oberfläche | [m$^2$/g] | 130 | 126 | 133 | 150 |
| DBP | [ml/100g] | 124 | 106 | 111 | 107 |
| Flüchtige | [Gew.-%] | 1,1 | 3,4 | 3,4 | 3,9 |
| pH-Wert | | 9,1 | 6,7 | 6,9 | 6,8 |

Der Aschegehalt der obigen Ruße besteht im wesentlichen aus hochdispersem Siliziumdioxid. Bei Ruß1 handelt es sich um einen Vergleichsruß mit einem Aschegehalt von nur 0,1 Gew.-%, der ohne Zugabe von Silikonöl zum Rußrohstoff hergestellt wurde. Ruß2, Ruß3 und Ruß4 enthalten etwa 12, 14 und 16 Gew.-% Siliziumdioxid.

Lacktechnische Untersuchungen:

Die vier Ruße von Tabelle 2 wurden zur Herstellung von Schwarzlacken in einem Zweikomponenten-Bindemittelsystem auf Basis hydroxylierter Acrylatharze mit Isocyanaten als Härter verwendet.

Zur Herstellung der Lacke wurde eine Bindemittellösung aus 60 Gew.-% Synthalan LS768 der Synthopol Chemie, Buxtehude, in 98 %igem Butylacetat verwendet. Bei dem Bindemittel handelt es sich hierbei um ein hydroxyliertes Acrylatharz mit 1,5 Gew.-% OH-Gruppen. Der Bindemittellösung wurden 45 Gew.-% Ruß, bezogen auf den Festkörpergehalt der Lösung, zugegeben. 80 g dieses Mahlguts wurden 5 Minuten mit einem Dissolver dispergiert. Anschließend wurden 550 g Stahlperlen zugegeben und eine Stunde mit einem Scandex Dispergierer dispergiert. Danach wurden die Stahlperlen abgesiebt und die Lackherstellung durch Zumischen von weiterer Bindemittellösung abgeschlossen. Durch die Verdünnung mit weiterer Bindemittellösung wurde der Rußgehalt des fertigen Lackes auf 5 Gew.-%, bezogen auf den Bindemittelgehalt des Lackes, herabgesetzt.

Die Lacke wurden mit Härter auf der Basis von Isocyanaten (Desmodur N von Bayer) versetzt und auf Glasplatten mit einer Dicke als Naßfilm von 150 µm aufgezogen. An den getrockneten Lacken wurden $M_y$, $M_c$, Glanz und Haze gemessen.

Tabelle 3

| Untersuchungsergebnisse | | | | | |
|---|---|---|---|---|---|
| Eigenschaften | | Ruß1 | Ruß2 | Ruß3 | Ruß4 |
| Farbtiefe $M_Y$ | | 252 | 241 | 240 | 243 |
| Farbton $M_C$-$M_Y$ | | 0,98 | 0,29 | 0,99 | 0,45 |
| Haze | [%] | 17 | 8 | 8 | 7 |
| Glanz 20° | [%] | 77 | 75 | 76 | 75 |
| Viskosität bei SG= 48 s$^{-1}$ | [mPas] | 2385 | 1722 | 1550 | 1602 |
| Viskosität bei SG=433 s$^{-1}$ | [mPas] | 833 | 775 | 758 | 765 |

Die Untersuchungsergebnisse der Tabelle 3 zeigen, daß der Haze des Lackes mit Hilfe der erfindungsgemäßen Ruße dramatisch vermindert wird. Dies belegt eine bessere Dispersion der Ruße. Weiterhin zeigt Tabelle 3 eine deutliche Verminderung der Lackviskosität und der Thixotropie, das heißt des Viskositätsabfalls bei hohen Scherungsraten, durch die erfindungsgemäßen Ruße. Diese Effekte waren unerwartet, da die separate Zugabe von Kieselsäure, zum Beispiel von pyrogen hergestellter Kieselsäure, im allgemeinen zu einer erhöhten Viskosität und Thixotropie des Lackes führt. Die separate Zugabe von Kieselsäure kann nachteilige Auswirkungen haben, wie zum Beispiel einen höheren Bedarf an Binder oder Lösungsmittel und einen schlechteren Verlauf des Lackes.

**Beispiel 2: (nicht erfindungsgemäß)**

Es wurde eine weitere Serie von sechs Furnacerußen mit unterschiedlichen Siliziumgehalten hergestellt. Die rußtechnischen Untersuchungsergebnisse zeigt Tabelle 4. Der Ausgangsruß, Ruß5, wurde ohne Zugabe von Silikonöl zum Rußrohstoff hergestellt. Sein Aschegehalt von 1,22 Gew.-% beruht im wesentlichen auf Pottasche (Calciumcarbonat), welche dem Rußrohstoff zur Beeinflussung der Struktur des fertigen Rußes zugesetzt wird. Der zusätzliche Aschegehalt der Ruße 6 bis 10 wird durch ihren Gehalt an Siliciumdioxid verursacht.

Anwendungstechnische Untersuchungen:

Die sechs Ruße von Tabelle 4 wurden zur Herstellung von Schwarzlacken in einem wäßrigen Bindemittelsystem (Polyurethan-Dispersion; 30 Gew.-% Polyurethan, bezogen auf das Gewicht der Dispersion) und in einem Zweikomponenten-Bindemittelsystem (Synthalan LS768 in Butylacetat 98%) verwendet. Die Lacke wurden analog zu Beispiel 1 hergestellt. Die Ergebnisse der lacktechnischen Untersuchungen sowie das rheologische Verhalten der Lacke zeigen die Tabellen 5 (wäßriges Bindemittelsystem) und 6 (Zweikomponenten-Bindemittel).

Mit zunehmendem Siliziumgehalt verbessert sich die Farbtiefe $M_Y$. Dieser Effekt ist je nach verwendetem Lackbindemittelsystem mehr oder weniger stark ausgeprägt. Darüber hinaus wird durch den Siliziumgehalt auch die Rußstabilität im Lack verbessert, was sich durch eine höheren $(M_C-M_Y)$-Wert, das heißt durch einen höheren Blauanteil bei der Farbmessung, äußert.

Wie die Tabellen 5 und 6 zeigen, werden durch die Verwendung von siliziumhaltigen Rußen Viskosität und Thixotropie verbessert. Mit zunehmendem Gehalt an Silizium nehmen beide Werte ab. Besonders Bemerkenswert ist die Verminderung des Thixotropie-Indexes im wäßrigen System in Abhängigkeit vom Siliciumgehalt (siehe Tabelle 5). Mit zunehmendem Siliciumgehalt vermindert sich nicht nur die Viskosität, sondern auch die Viskositätsänderung bei Änderung des Schergefälles (Thixotropie-Index). Auf Grund dieser Eigenschaft sind die erfindungsgemäßen Ruße hervorragend für die Kombination mit plättchenförmigen Pigmenten wie zum Beispiel Perlglanzpigmenten und Aluminiumflakes geeignet und erleichtern deren parallele Ausrichtung in der Lackschicht. Der niedrige Thixotropie-Index verhindert, daß nach Aufbringen des Lackes sich die Viskosität sofort wieder erhöht und die Beweglichkeit der plättchenförmigen Pigmente im noch frischen Lack einschränkt.

Tabelle 6 enthält auch das bei Anfertigung eines Graulackes mit einem Gewichtsverhältnis von Titandioxid zu Ruß von 100:4 zu beobachtende Ausschwimmverhalten. Im Graulack ist beim Ausgangsruß (Ruß5) ein ausgeprägter Unterschied in der optischen Dichte (Density) zu sehen (Titandioxid schwimmt aus). Mit zunehmendem Siliziumgehalt verringert sich der Unterschied in der optischen Dichte zwischen nicht ausgeriebener und ausgeriebener Lackfläche.

.Tabelle 4: rußtechnische Eigenschaften Si-dotierter Ruße

| Eigenschaften | | Ruß5 | Ruß6 | Ruß7 | Ruß8 | Ruß9 | Ruß10 |
|---|---|---|---|---|---|---|---|
| Asche | [Gew.-%] | 1,22 | 2,77 | 6,04 | 8,34 | 9,08 | 10,45 |
| CTAB | [m$^2$/g] | 178,3 | 182,9 | 190,9 | 197,9 | 179,2 | 189,7 |
| Jodadsorption | [mg/g] | 257,6 | 258,0 | 286,4 | 285,4 | 264,4 | 279,2 |
| DBP | [ml/100g] | 60,2 | 60,9 | 62,4 | 63,7 | 62,0 | 63,0 |
| pH-Wert | | 9,7 | 9,9 | 10,0 | 10,0 | 10,1 | 10,0 |

Tabelle 5: lacktechnische Eigenschaften im wäßrigen System

| Eigenschaften | | Ruß5 | Ruß6 | Ruß7 | Ruß8 | Ruß9 | Ruß10 |
|---|---|---|---|---|---|---|---|
| **Rheologie:** | | | | | | | |
| Viskosität bei SG = 48 s$^{-1}$ | [mPas] | 60,3 | 43,1 | 51,7 | 51,7 | 43,1 | 43,1 |
| Viskosität bei SG = 433 s$^{-1}$ | [mPas] | 41,1 | 37,3 | 41,1 | 45,9 | 38,3 | 38,3 |
| Thixotropie-Index | | 1,465 | 1,154 | 1,256 | 1,125 | 1,125 | 1,125 |
| **Coloristik:** | | | | | | | |
| $M_Y$ | | 254,5 | 257,5 | 255,7 | 255,1 | 259 | 261,3 |
| $M_C-M_Y$ | | 0,59 | 1,28 | 0,69 | 0,92 | 1,64 | 2,07 |

EP 0 924 271 B1

## Tabelle 6: lacktechnische Eigenschaften im Zweikomponentensystem

| Eigenschaften | | Ruß5 | Ruß6 | Ruß7 | Ruß8 | Ruß9 | Ruß10 |
|---|---|---|---|---|---|---|---|
| **Rheologie:** | | | | | | | |
| Viskosität bei SG = 48 s$^{-1}$ | [mPas] | 1282,9 | 1239,8 | 1119,3 | 1119,3 | 955,7 | 981,5 |
| Viskosität bei SG = 433 s$^{-1}$ | [mPas] | 978,7 | 916,5 | 852,4 | 859,1 | 785,4 | 768,4 |
| Thixotropie-Index | | 1,311 | ·1,353 | 1,313 | 1,303 | 1,217 | 1,248 |
| **5%-ige Auflackung:** | | | | | | | |
| Glanz 20° | [%] | 83,5 | 83,9 | 83,8 | 83,4 | 84,0 | 83,6 |
| Haze | [%] | 25,1 | 23,9 | 25,8 | 25,4 | 22,3 | 26,8 |
| $M_Y$ | | 260 | 257,8 | 261,4 | 260,4 | 259,9 | 260,3 |
| $M_C-M_Y$ | | 0,21 | 0,06 | 1,36 | 1,63 | 0,71 | 2,01 |
| **Graulack; TiO$_2$:Ruß = 100:4** | | | | | | | |
| Density D ausgerieben | | 0,88 | 0,892 | 0,873 | 0,869 | 0,849 | 0,853 |
| Density D nicht ausgerieben | | 0,677 | 0,666 | 0,701 | 0,729 | 0,719 | 0,700 |
| Ausschwimmverhalten, ausger. = 100 % | | 76,9 | 74,7 | 80,3 | 83,9 | 84,7 | 82,1 |

EP 0 924 271 B1

**Patentansprüche**

1. Lack enthaltend ein Lack-Bindemittelsystem und Ruß als Pigment,
   **dadurch gekennzeichnet,**
   **daß** der Ruß 0,1 bis 30 Gew.-% Silizium, berechnet als Siliziumdioxid und bezogen auf sein Gesamtgewicht, und 0,01 bis 2 Gew.-% Stickstoff enthält, wobei der Ruß hergestellt wird durch zusetzen von Stickstoffhaltigen Siliziumverbindungen in den Rußrohstoff.

2. Lack nach Anspruch 1,
   **dadurch gekennzeichnet,**
   **daß** das Lackbindemittelsystem ein lösemittelhaltiges Bindemittelsystem ist.

3. Lack nach Anspruch 1,
   **dadurch gekennzeichnet,**
   **daß** das Lackbindemittelsystem ein wasserhaltiges Bindemittelsystem ist.

4. Lack nach Anspruch 2 oder 3,
   **dadurch gekennzeichnet,**
   **daß** er als zusätzliches Pigment Titandioxid oder ein Buntpigment oder Pigmentmischungen enthält.

5. Lack nach Anspruch 2 oder 3,
   **dadurch gekennzeichnet,**
   **daß** er zusätzlich wenigstens ein plättchenförmiges Pigment enthält.

6. Lack nach Anspruch 5,
   **dadurch gekennzeichnet,**
   **daß** das plättchenförmige Pigment ein Perlglanzpigment, Aluminiumflakes oder eine Mischung davon ist.

7. Druckfarbe enthaltend ein Bindemittelsystem und Ruß als Pigment,
   **dadurch gekennzeichnet,**
   **daß** der Ruß 0,1 bis 30 Gew.-% Silizium, berechnet als Siliziumdioxid und bezogen auf sein Gesamtgewicht, und 0,01 bis 2 Gew.-% Stickstoff enthält, wobei der Ruß hergestellt wird durch zusetzen von stickstoffhaltigen Siliziumverbindungen in den Rußrohstoff.

8. Druckfarbe nach Anspruch 7,
   **dadurch gekennzeichnet,**
   **daß** sie als zusätzliches Pigment Titandioxid oder ein Buntgigment oder Pigmentmischungen enthält.

9. Druckfarbe nach Anspruch 7,
   **dadurch gekennzeichnet,**
   **daß** sie zusätzlich wenigstens ein plättchenförmiges Pigment enthält.

10. Druckfarbe nach Anspruch 9,
    **dadurch gekennzeichnet,**
    **daß** das plättchenförmige Pigment ein Perlglanzpigment, Aluminiumflakes oder eine Mischung davon ist.

**Claims**

1. A lacquer containing a lacquer binder system and carbon black as the pigment,
   **characterised in that**
   the carbon black contains 0.1 to 30 wt.% of silicon, calculated as silicon dioxide and relative to the entire weight thereof, and 0.01 to 2 wt.% of nitrogen, wherein the carbon black is produced by adding nitrogenous silicon compounds to the carbon black feedstock.

2. A lacquer according to claim 1,
   **characterised in that**
   the lacquer binder system is a binder system containing solvent.

**3.** A lacquer according to claim 1,
**characterised in that**
the lacquer binder system is a binder system containing water.

**4.** A lacquer according to claim 2 or 3,
**characterised in that**
it contains titanium dioxide or a coloured pigment or mixtures of pigments as an additional pigment.

**5.** A lacquer according to claim 2 or 3,
**characterised in that**
it additionally contains at least one lamellar pigment.

**6.** A lacquer according to claim 5,
**characterised in that**
the lamellar pigment is a pearlescent pigment, aluminium flakes or a mixture thereof.

**7.** A printing ink containing a binder system and carbon black as the pigment,
**characterised in that**
the carbon black contains 0.1 to 30 wt.% of silicon, calculated as silicon dioxide and relative to the entire weight thereof, and 0.01 to 2 wt.% of nitrogen, wherein the carbon black is produced by adding nitrogenous silicon compounds to the carbon black feedstock.

**8.** A printing ink according to claim 8,
**characterised in that**
it contains titanium dioxide or a coloured pigment or mixtures of pigments as an additional pigment.

**9.** A printing ink according to claim 8,
**characterised in that**
it additionally contains at least one lamellar pigment.

**10.** A printing ink according to claim 10,
**characterised in that**
the lamellar pigment is a pearlescent pigment, aluminium flakes or a mixture thereof.

**Revendications**

**1.** Peinture contenant un système de liant pour peinture et du noir de carbone en tant que pigment,
**caractérisée en ce que**
le noir de carbone contient 0,1 à 30 % en poids de silicium, calculé en dioxyde de silicium et par rapport à son poids total, et 0,01 à 2 % en poids d'azoté, le noir de carbone étant fabriqué par addition de composés de silicium azotés dans la suie.

**2.** Peinture selon la revendication 1,
**caractérisée en ce que**
le système de liant pour peinture est un système de liant contenant un solvant.

**3.** Peinture selon la revendication 1,
**caractérisée en ce que**
le système de liant pour peinture est un système de liant contenant de l'eau.

**4.** Peinture selon la revendication 2 ou 3,
**caractérisée en ce que**
elle contient, en tant que pigment supplémentaire, un dioxyde de titane ou un pigment coloré ou des mélanges de pigments.

**5.** Peinture selon la revendication 2 ou 3,
**caractérisée en ce que**

elle contient en complément au moins un pigment plaquettaire.

6. Peinture selon la revendication 5,
**caractérisée en ce que**
le pigment plaquettaire est un pigment nacré, un flocon d'aluminium ou un mélange de ceux-ci.

7. Encre d'imprimerie contenant un système de liant et du noir de carbone en tant que pigment,
**caractérisée en ce que**
le noir de carbone contient 0,1 à 30 % en poids de silicium, calculé en dioxyde de silicium et par rapport à son poids total, et 0,01 à 2 % en poids d'azote, le noir de carbone étant fabriqué par addition de composés de silicium azotés dans la suie.

8. Encre d'imprimerie selon la revendication 8,
**caractérisée en ce que**
elle contient, en tant que pigment supplémentaire, du dioxyde de titane ou un pigment coloré ou des mélanges de pigments.

9. Encre d'imprimerie selon la revendication 8,
**caractérisée en ce que**
elle contient en complément au moins un pigment plaquettaire.

10. Encre d'imprimerie selon la revendication 10,
**caractérisée en ce que**
le pigment plaquettaire est un pigment nacré, un flocon d'aluminium ou un mélange de ceux-ci.